# EUROPÄISCHE PATENTSCHRIFT

(11) **EP 1 371 992 B1**
(45) Veröffentlichungstag und Bekanntmachung des Hinweises auf die Patenterteilung: **07.10.2009**
(21) Anmeldenummer: 03012345.9
(22) Anmeldetag: 30.05.2003
(51) Int. Cl.: G01P 3/44, F16J 15/32

(54) **Vorrichtung zur Abdichtung des Spaltes zwischen einem ruhenden Gehäuse und einer rotierenden Welle**
Device for sealing the air gap between a stationary housing and a rotating shaft
Dispositif de fermeture étanche de l'espace situé entre un boîtier statique et un arbre en rotation

(30) Priorität: 11.06.2002 DE 10225959
(43) Veröffentlichungstag der Anmeldung: 17.12.2003
(73) Patentinhaber: Carl Freudenberg KG, 69469 Weinheim (DE)
(72) Erfinder: Bruyere, Didier, 52600 Chalindrey (FR); Lutaud, Dominique, 52360 Orbigny au Mont (FR)

(56) Entgegenhaltungen:
- EP-A- 0 665 436
- EP-A- 0 984 286
- DE-A- 4 320 940
- DE-A- 10 024 026

## Beschreibung

### Technisches Gebiet

Die Erfindung befasst sich mit einer Vorrichtung zur Abdichtung des Spaltes zwischen einem ruhenden Maschinenteil und einer rotierenden Welle umfassend einen am Maschinenteil ruhend gelagerten Wellendichtring mit einer Dichtmanschette aus PTFE oder einem PTFE-Compound, welche die Welle unter einer elastischen Vorspannung anliegend berührt und ein dem Wellendichtring in Richtung der Außenluft vorgelagertes, mit der Welle umlaufendes Impulsrad mit einem Impulsgeber, der die Welle in einem radialen Abstand umschließt sowie einen ruhend gelagerten Sensor zur Erfassung von Drehbewegungen des Impulsrades, wobei der Impulsgeber durch eine zylindrische Hülse mit radial nach außen weisenden Magnetpolen gebildet ist und die Dichtmanschette herstellungsbedingt die Gestalt einer kreisringförmigen Scheibe hat, im Bereich ihres Innenumfangs in Richtung des Impulsrades aufgeweitet ist und mit dem Innenumfang in den durch den radialen Abstand zwischen der zylindrischen Hülse des Impulsgebers und der Welle gebildeten Spalt eintaucht und dass der an der Welle anliegende Abschnitt der Dichtmanschette, die Magnetpole des Impulsgebers oder Geberrads und der Sensor radial übereinander in einem axialen Bereich liegen.

### Stand der Technik

Aus der EP 0 726 468 B1 ist eine Vorrichtung bekannt, bei der der Impulsgeber mit der Welle umläuft und ein zusätzlicher Aufnehmer für die Impulssignale vorgesehen ist. Die bekannte Vorrichtung benötigt jedoch einen relativ großen Bauraum und ist nicht einsetzbar, wenn dieser Bauraum nicht zur Verfügung steht. Dieses ist beispielsweise am hinteren Ende der Kurbelwelle der Fall, weil dort durch das eingesetzte Schwungrad der Platz sehr beschränkt ist.

In den Dokumenten DE 100 24 026 A, EP-A-0 665 436 und EP-A-0 984 286 werden Vorrichtungen behandelt, die jeweils aus einem Wellendichtring mit einer Dichtfunktion, einem Impulsrad mit einem Impulsgeber zur Drehzahlmessung sowie einem Sensor zur Erfassung der Drehbewegungen des Impulsrades und damit der jeweiligen Welle bestehen. Alle drei in den genannten Dokumenten gezeigten Vorrichtungen können an einem Wellenende befestigt werden. In allen Fällen ist für die Unterbringung von Wellendichtring, Impulsrad und Sensor jedoch ein Deckel vorgesehen, was zusätzlichen Raum beansprucht.

### Darstellung der Erfindung

Der Erfindung liegt die Aufgabe zu Grunde, die Vorrichtung zur Abdichtung des Spaltes zwischen einem ruhenden Gehäuse und einer rotierenden Welle so auszubilden, dass sie bei kleinsten Einbauräumen in radialer und/oder axialer Richtung einsetzbar ist. Dabei soll eine gute Zugänglichkeit zum Sensor gegeben sein, was im Reparaturfall sehr wichtig ist. Die Vorrichtung soll kostengünstig herstellbar sein, einfach montiert werden können und eine lange Gebrauchsdauer haben.

Die Lösung der gestellten Aufgabe wird mit den Merkmalen des Anspruchs 1 erreicht. Die Unteransprüche 2 bis 4 stellen vorteilhafte weitere Ausbildungen des Gegenstands der Erfindung dar. Bei einer erfindungsgemäßen Vorrichtung wird der Impulsgeber durch eine zylindrische Hülse mit radial nach außen weisenden Magnetpolen gebildet. Die Dichtlippe hat herstellungsbedingt die Gestalt einer kreisförmigen Scheibe und ist im Bereich ihres Innenumfangs in Richtung des Impulsrades aufgeweitet und taucht mit dem Innenumfang in den durch den Abstand zwischen der Hülse und der Welle gebildeten Spalt eintaucht. Eine derart ausgebildete Vorrichtung kann beispielsweise am hinteren Ende der Kurbelwelle eines Hubkolbenmotors angebracht sein. Diese Stelle ist besonders günstig, bei der Bestimmung der Kurbelwellenlaufruhe und für die Erkennung von Aussetzern.

Die kreisringförmige Scheibe ist zumindest an dem an der Welle anliegenden Abschnitt mit hydrodynamisch wirkenden Rückförderelementen für Leckflüssigkeit versehen. Bei ihrer Anlage an der Welle wird die Scheibe in eine Art Dichtmanschette umgewandelt, welche die Welle konzentrisch umschließt. Die Rückförderelemente können schraubengangförmig verlaufen, vom freien Ende der Dichtmanschette aus bis maximal zum Anbindebereich der Dichtmanschette. Außerdem kann die Dichtmanschette im Bereich ihrer Anlage auf der Welle durch eine Drallunterbrechung abgesperrt sein. Die als Rückförderelemente wirkenden Ausnehmungen können im Querschnitt gesehen, u-förmig, v-förmig oder ähnlich ausgebildet sein. Dabei können die Ausnehmungen ein- oder mehrgängig angeordnet werden.

Bevorzugt wird die Scheibe aus PTFE oder Gummi hergestellt, dabei sind auch PTFE-Compounds, Elastomere oder vernetzbare Thermoplaste verwendbar.

Die gesamte Vorrichtung kann als Bausatz ausgeführt werden, der aus dem Wellendichtring, dem Impulsrad und dem Sensor besteht.

Die besonders platzsparende Ausbildung der Vorrichtung wird dann erreicht, wenn das lmpulsrad einen sich in radialer Richtung erstreckenden Montageflansch hat, der während der bestimmungsgemäßen Verwendung zwischen einer Stirnfläche einer Kurbelwelle und einem Schwungrad an einer Kolbenkraftmaschine eingeklemmt ist. Über den Montageflansch kann das lmpulsrad an der Stirnfläche der Kurbelwelle angeschraubt werden.

Der Sensor wird bevorzugt auf der Umgebungsseite der Dichtstelle angeordnet. Dieses ist kostengünstig und platzsparend.

### Kurzbeschreibung der Zeichnung

Anhand von mehreren in der Zeichnung dargestellten Ausführungsbeispielen wird die Erfindung nachstehend näher erläutert.
Es zeigt:
- Figur 1: einen Längsschnitt durch die Vorrichtung mit einem lmpulsrad, Sensor und Dichtmanschette,
- Figur 2: ebenfalls im Längsschnitt die Vorrichtung mit einer konstruktiv anders angeordneten Dichtmanschette,
- Figur 3: die Vorrichtung im Längsschnitt mit einem Geberrad und einer in einem Haftteil angebrachten Dichtmanschette und
- Figur 4: eine Vorrichtung analog zur Figur 2 mit einem Geberrad und einer mediumseitig befestigten Dichtmanschette.

### Ausführung der Erfindung

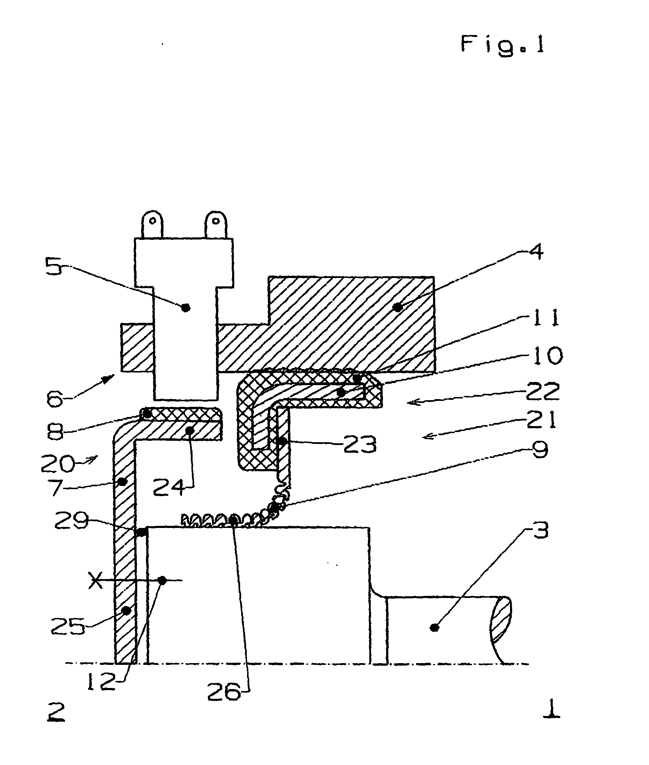

Die in der Figur 1 gezeigte Vorrichtung 20 besteht im Wesentlichen aus dem Wellendichtring 21, dem Multipolrad 7 sowie dem Sensor 5. Der Wellendichtring 21 hat die aus einem polymeren Material bestehende Dichtmanschette 9 die ihrerseits an der Halterung 22 mit ihrem radial äußeren Rand 23 befestigt ist.

Die Halterung 22 besteht aus dem Versteifungsring 10 aus Metall, der von einer Ummantelung 11 aus einem polymeren Werkstoff umgeben ist. Die Dichtmanschette 9 besteht aus PTFE und ist trompetenförmig ausgebildet. Mit ihrem geradlinig verlaufenden Abschnitt 26 liegt sie an der Welle 3 an. Die Halterung 22 ist in die Bohrung 6 des Gehäuses 4 ortsfest eingepresst. Der Impulsgeber 7 besteht aus der zylindrischen Hülse 24, die mit radial nach außen weisenden Magnetpolen 8 versehen ist. Außerdem hat die Hülse 24 einen sich in radialer Richtung erstreckenden Montageflansch 25, über den das Impulsrad 7 an der Stirnfläche der Kurbelwelle 3 angeschraubt ist. Hierbei kann ein nicht näher gezeichnetes Schwungrad gleichzeitig mit angeschraubt werden. Am Gehäuse 4 ist der Sensor 5 angebracht, der in bekannter Weise zum Abgreifen der unterschiedlichen Messdaten benutzt wird. Der Sensor 5 liegt gegenüber der magnetisierten Polymerschicht am Außenumfang des Multipolrades 7 und steht in die Gehäusebohrung 6 vor. Die Anordnung von Sensor 5, Multipolrad 7 und Dichtmanschette 9 ist so getroffen, dass der Sensor 5 die magnetisierte Polymerschicht 8 des Multipolrades 7 und der auf der Welle 3 aufliegende Abschnitt 26 der Dichtmanschette 9 radial übereinanderliegen. Dadurch wird die axiale Ausdehnung der gesamten Vorrichtung auf ein Minimum reduziert. Das abzudichtende Medium befindet sich im Raum 1 während der Raum 2 die Umgebungsluft enthält.

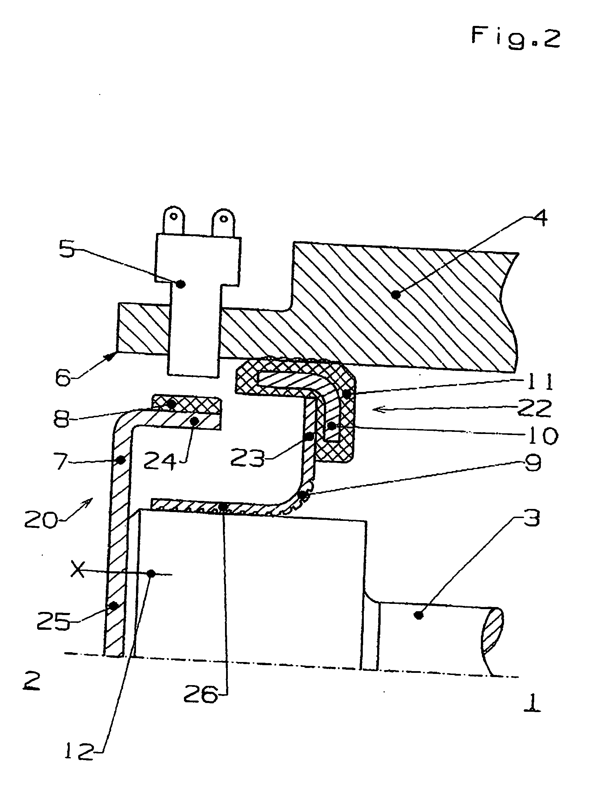

Die Figur 2 zeigt eine Ausbildung der Vorrichtung 20 im Längsschnitt die in ihren wesentlichen Teilen der Ausbildung nach Figur 1 entspricht, mit dem Unterschied, dass die Halterung 22 umgekehrt eingesetzt ist und dass der Befestigungsteil 23 der Dichtmanschette 9 zur Umgebungsseite 2 hin ausgerichtet ist.

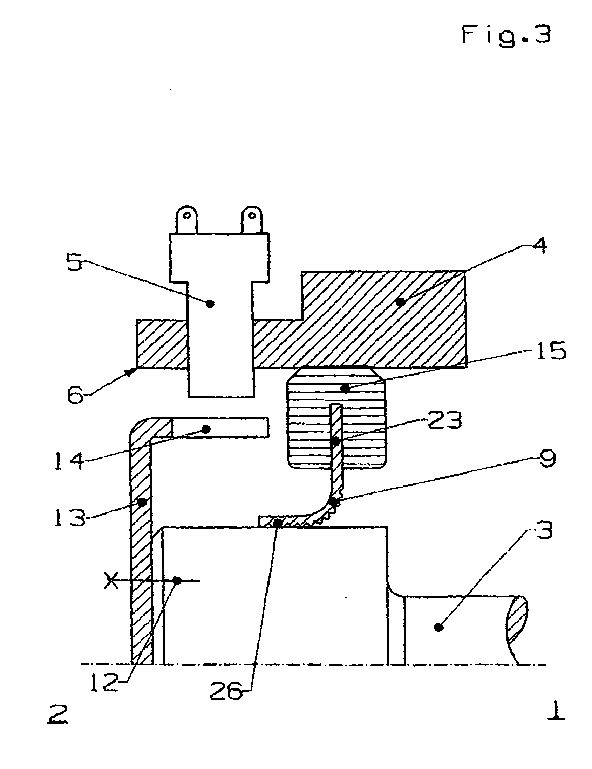

Bei der Figur 3 ist eine Ausführungsform gewählt, bei der ein Geberrad 13 verwendet wird, an dessen Außenumfang Zähne 14 und Zahnlücken einander abwechseln. Außerdem ist die Dichtmanschette 9 mit ihrem Befestigungsteil 23 in einem Haftteil 15 aus Kunststoff gehalten. Dieses Haftteil ist in die Bohrung 6 des Gehäuses 4 eingepresst.

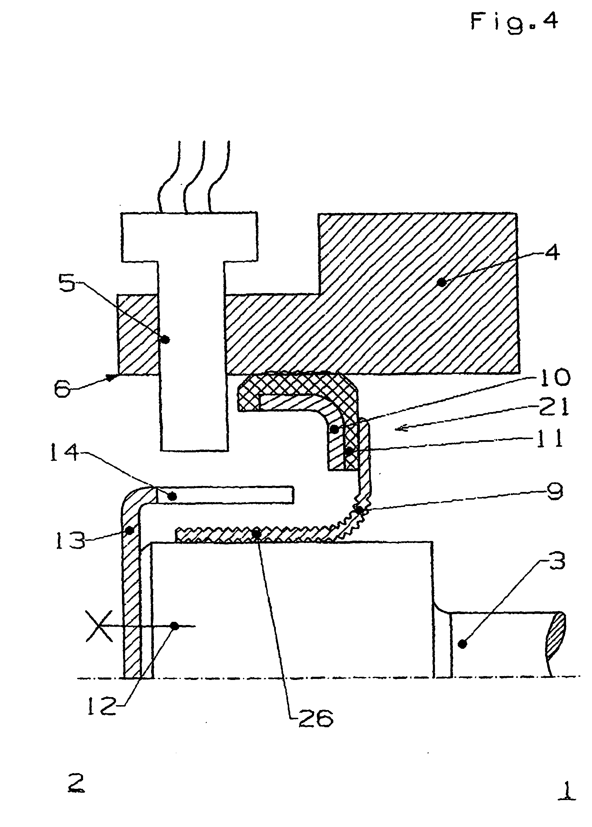

Die Figur 4 zeigt eine weitere Möglichkeit der konstruktiven Ausgestaltung des Dichtringes und die Anbindung der Dichtmanschette 9 an demselben. Der Dichtring 21 besteht hier aus dem Versteifungsring 10, der lediglich auf einer Außenseite zum Gehäuse 4 hin und zur Dichtmanschette 9 hin mit einer Ummantelung aus einem polymeren Stoff 11 versehen ist. Bei dieser Ausführungsform ist ebenfalls ein Geberrad 13 mit den Zähnen 14 vorgesehen.

Die erfindungsgemäße Vorrichtung kann äußerst kleinbauend ausgeführt werden. Die Dichtmanschette 9 kann beispielsweise als Scheibe mit nur 1 mm Dicke ausgeführt werden und sie erhält ihre trompetenartige Ausbildung durch Aufschieben auf die Welle 3, welche an ihrem äußeren Ende mit einer Fase 29 zu versehen ist.

## Patentansprüche

1. Vorrichtung zur Abdichtung des Spaltes zwischen einem ruhenden Maschinenteil und einer rotierenden Welle umfassend einen am Maschinenteil ruhend gelagerten Wellendichtring mit einer Dichtmanschette aus PTFE oder einem PTFE-Compound, welcher die Welle unter einer elastischen Vorspannung anliegend berührt und ein dem Wellendichtring in Richtung der Außenluft vorgelagertes, mit der Welle umlaufendes Impulsrad mit einem Impulsgeber, der die Welle in einem radialen Abstand umschließt sowie einen ruhend gelagerten Sensor zur Erfassung von Drehbewegungen des Impulsrades, wobei der Impulsgeber durch eine zylindrische Hülse mit radial nach außen weisenden Magnetpolen gebildet ist und die Dichtmanschette herstellungsbedingt die Gestalt einer kreisringförmigen Scheibe hat, im Bereich ihres Innenumfangs in Richtung des Impulsrades aufgeweitet ist und mit dem Innenumfang in den durch den radialen Abstand zwischen der zylindrischen Hülse des Impulsgebers und der Welle gebildeten Spalt eintaucht und dass der an der Welle anliegende Abschnitt der Dichtmanschette, die Magnetpole des Impulsgebers oder Geberrads und der Sensor radial übereinander in einem axialen Bereich liegen, **dadurch gekennzeichnet, dass** der Wellendichtring (21) mit Dichtmanschette (9) und die Magnetpole (8) des Impulsgeber(7) in eine am hinteren Ende einer Kurbelwelle (3) eines Hubkolbenmotors angebrachte, die Welle (3) umgreifende Bohrung (6) im Kurbelwellengehäuse (4) eingefügt sind, wobei der Wellendichtring (21) aus einer Halterung (22) aus einem Versteifungsring (10) aus Metall mit einer Ummantelung (11) aus einem polymeren Werkstoff oder aus einem Hafteil (15) aus einem Kunststoff besteht und in die Bohrung (6) des Gehäuses (4) eingepresst ist, der Sensor (5) am Gehäuse (4) auf der Umgebungsseite der Dichtstelle (26) in die Bohrung (6) vorstehend angeordnet ist und der Impulsgeber (7) über einen sich in radialer Richtung erstreckenden Montageflansch (25) an der Stirnfläche der Welle (3) angebracht ist.

2. Vorrichtung nach Anspruch 1, **dadurch gekennzeichnet, dass** die kreisringförmige Scheibe (9) zumindest in dem an der Welle (3) anliegenden Abschnitt (26) mit hydrodynamisch wirkenden Rückförderungen für Leckflüssigkeit versehen ist.

3. Vorrichtung nach einem der Ansprüche 1 oder 2, **dadurch gekennzeichnet, dass** der einen Wellendichtring (21), das Impulsrad (7) und der Sensor (5) einen Bausatz bilden.

4. Vorrichtung nach einem der Ansprüche 1 bis 3, **dadurch gekennzeichnet, dass** der Montageflansch (25) während der bestimmungsgemäßen Verwendung zwischen den Stirnflächen, einer Kurbelwelle (3) und eines Schwungrads einer Kolbenkraftmaschine eingeklemmt ist.

## Claims

1. Device for sealing the air gap between a stationary engine part and a rotating shaft, the device comprising a shaft sealing ring which is mounted in a stationary manner on the engine part and has a sealing gaiter made of PTFE or a PTFE compound, said shaft sealing ring bearing under an elastic prestress against the shaft, and a pulse wheel which is mounted upstream of the shaft sealing ring in the direction of the external air, revolves together with the shaft and has a pulse transmitter which surrounds the shaft at a radial distance, and a sensor which is mounted in a stationary manner for detecting rotational movements of the pulse wheel, wherein the pulse transmitter is formed by a cylindrical sleeve with radially outwardly pointing magnetic poles, and the sealing gaiter is made by the manufacturer to be in the form of a circular ring-shaped disc, to be expanded in the region of its inner circumference in the direction of the pulse wheel and to enter with the inner circumference into the air gap formed by the radial distance between the cylindrical sleeve of the pulse generator and the shaft, and wherein that section of the sealing gaiter which bears against the shaft, the magnetic poles of the pulse generator or generator wheel, and the sensor lie radially one above another in an axial region, **characterized in that** the shaft sealing ring (21) with the sealing gaiter (9), and the magnetic poles (8) of the pulse generator (7) are inserted into a bore (6) in the crankshaft housing (4), said bore being made at the rear end of a crankshaft (3) of a reciprocating piston engine and engaging around the shaft (3), the shaft sealing ring (21) comprising a holder (22) comprising a metal stiffening ring (10) with a casing (11) made of a polymeric material, or comprising a plastic adhesive part (15), and being pressed into the bore (6) in the housing (4), the sensor (5) being arranged on the housing (4) in a manner such that it protrudes on the side surrounding the sealing point (26) into the bore (6), and the pulse generator (7) being attached to the end surface of the shaft (3) via a mounting flange (25) extending in the radial direction.

2. Device according to Claim 1, **characterized in that** the circular ring-shaped disc (9) is provided with hydrodynamically acting return means for leakage liquid at least in the section (26) bearing against the shaft (3).

3. Device according to either of Claims 1 and 2, **characterized in that** the one shaft sealing ring (21), the pulse wheel (7) and the sensor (5) form a kit.

4. Device according to one of Claims 1 to 3,
**characterized in that** the mounting flange (25) is clamped between the end surfaces of a crank (3) and a flywheel of a reciprocating engine when used correctly.

## Revendications

1. Dispositif pour assurer l'étanchéité entre une pièce de machine fixe et un arbre rotatif, comprenant :
une bague d'étanchéité d'arbre montée fixement sur la pièce de machine et présentant une manchette d'étanchéité en PTFE ou en un composé de PTFE qui repose contre l'arbre sous contrainte élastique,
une roue à impulsions entourant l'arbre, montée en amont de la bague d'étanchéité d'arbre dans la direction de l'air extérieur et dotée d'un émetteur d'impulsions qui entoure l'arbre à distance radiale et
un détecteur monté fixement pour détecter les déplacements de rotation de la roue à impulsions,
l'émetteur d'impulsions étant formé par un manchon cylindrique qui présente des pôles magnétiques orientés radialement vers l'extérieur,
la manchette d'étanchéité présentant du fait de sa fabrication la forme d'un disque circulaire, étant évasée en direction de la roue à impulsions dans la partie qui forme sa périphérie intérieure et s'enfonçant par sa périphérie intérieure dans l'interstice formé par la distance radiale entre le manchon cylindrique de l'émetteur d'impulsions et l'arbre,
la partie de la manchette d'étanchéité appliquée sur l'arbre, les pôles magnétiques de l'émetteur d'impulsions ou de la roue émettrice et le détecteur étant situés radialement les uns au-dessus des autres dans une partie axiale,
**caractérisé en ce que**
la bague d'étanchéité d'arbre (21) avec la manchette d'étanchéité (9) et le pôle magnétique (8) de l'émetteur d'impulsions (7) sont insérés dans le carter (4) du vilebrequin par un alésage (6) qui entoure l'arbre (3) et qui est ménagé à l'extrémité arrière du vilebrequin (3) d'un moteur à pistons,
**en ce que** la bague d'étanchéité d'arbre (21) est constituée d'un support (22) constitué d'une bague de renfort (10) en métal dotée d'une enveloppe (11) en matériau polymère ou d'une partie adhésive (15) en matière synthétique et étant enfoncée dans l'alésage (6) du carter (4),
**en ce que** le détecteur (5) est disposé sur le carter (4) sur le côté périphérique de l'emplacement d'étanchéité (26) en débordant dans l'alésage (6) et
**en ce que** l'émetteur d'impulsions (7) est placé sur la surface frontale de l'arbre (3) par l'intermédiaire d'une bride de montage (25) qui s'étend dans la direction radiale.

2. Dispositif selon la revendication 1, **caractérisé en ce que** le disque circulaire (9) est doté au moins dans sa partie (26) qui repose sur l'arbre (3) de refouleurs de renvoi qui agissent hydrodynamiquement sur le liquide de fuite.

3. Dispositif selon l'une des revendications 1 ou 2, **caractérisé en ce que** la bague d'étanchéité d'arbre (21), la roue à impulsions (7) et le détecteur (5) forment un module.

4. Dispositif selon l'une des revendications 1 à 3, **caractérisé en ce qu'**en utilisation correcte, la bride de montage (25) est serrée entre les surfaces frontales, le vilebrequin (3) et le volant d'inertie d'un moteur à pistons.
